# EUROPÄISCHE PATENTSCHRIFT

(11) **EP 0 556 545 B1**
(45) Veröffentlichungstag und Bekanntmachung des Hinweises auf die Patenterteilung: **18.10.1995**
(21) Anmeldenummer: 93100180.4
(22) Anmeldetag: 08.01.1993
(51) Int. Cl.: F16L 21/03, F16L 21/02, F16J 15/02

(54) **Dichtring für Steckmuffenverbindungen**
Sealing ring for an insert sleeve connection
Bague d'étanchéité pour un dispositif de connexion à manchon

(30) Priorität: 21.02.1992 DE 4205278
(43) Veröffentlichungstag der Anmeldung: 25.08.1993
(73) Patentinhaber: BODE GmbH, D-22532 Hamburg (DE)
(72) Erfinder: Bode, Michael, Dipl.-Ing., W-2000 Hamburg 52 (DE); Wolmeyer, Peter, W-2083 Halstenbek (DE)
(74) Vertreter: Hansmann, Dierk, Dipl.-Ing.

(56) Entgegenhaltungen:
- DE-A- 1 450 364
- DE-A- 2 435 089
- DE-U- 8 806 952
- US-A- 4 881 723

## Beschreibung

Die Erfindung betrifft einen Dichtring für Steckmuffenverbindungen im Bereich von rohrförmigen Körpern, der aus mindestens einem Elastomer ausgebildet ist.

Derartige Dichtringe werden in vielfältigen Anwendungen zur Abdichtung von Steckmuffenverbindungen eingesetzt, die im Bereich von Rohrenden oder im Bereich von Enden von Fittingen angeordnet sind. Derartige Fittinge können beispielsweise als T-Stücke oder andersartige Abzweigelemente ausgebildet sein. In Abhängigkeit von der jeweils vorgesehenen Anwendung werden die Dichtringe mit unterschiedlichen Ausbildungen versehen. Insbesondere sind Lippendichtungen sowie Dichtungen mit gerundeten Querschnittflächen bekannt. Diese Dichtringe werden im Bereich eines muffenförmigen Endes in nutförmigen Vertiefungen bzw. Sicken gehaltert, die die Steckmuffe im wesentlichen konzentrisch im Bereich einer Innenwandung umgeben. Es ist aber auch möglich, die Sicken im Bereich einer äußeren Begrenzung der in die Muffe einsteckbaren Teile anzuordnen.

Sowohl bei einem Einsetzen der Dichtringe in die dafür vorgesehenen Nuten als auch bei einem Einschieben eines Rohrendes in das Muffenteil und einem dabei erforderlichen Passieren des Dichtringes besteht ein erhebliches Problem in den dabei auftretenden Reibungskräften. Diese können dazu führen, daß eine Verformung oder eine Verdrehung des Dichtringes auftritt. Derartige Veränderungen können Undichtigkeiten bzw. Beschädigungen des Dichtringes zur Folge haben. Zur Verringerung dieser Reibkräfte ist es bekannt, den Dichtring nach seiner Fertigung mit einem Gleitmittel zu versehen. Dieses ist üblicherweise als ein Silikonöl ausgebildet, das auf den Ring aufgetragen wird. Der Auftragungsvorgang kann beispielsweise durch Sprühen, Tauchen, Wälzen oder durch eine Behandlung in einer Trommel erfolgen. Es ist ebenfalls bekannt, die Dichtringe zunächst unter Verwendung eines aufgebrachten Gleitmittels in die nutförmigen Vertiefungen einzusetzen und anschließend beispielsweise mittels eines Pinsels das Gleitmittel für den Steckvorgang aufzutragen. Bei der Herstellung der Steckverbindungen können auch seifenartige Gleitmittel zur Anwendung gelangen.

Aus der DE 39 09 381 A1 ist es bekannt, eine Dichtung aus Gummi oder gummiähnlichen Stoffen zur Abdichtung eines Zwischenraumes zwischen zwei Rohrenden zu verwenden. Die Dichtung wird dazu im Bereich eines Muffenendes des einen Rohres eingesetzt. Die Dichtung besteht im wesentlichen aus einem Dichtring und einem bandförmigen Gleitring. Der Gleitring ist mit Hilfe eines Gleitmittels auf dem Dichtring verschiebbar. Insbesondere ist daran gedacht, den Gleitring mit einer Schicht aus PTFE-Folie oder einer Polyamid-Folie zu versehen. Darüber hinaus ist auch eine Verwendung von flüssigen oder pastenartigen Gleitmitteln möglich, die auf den Gleitring aufgetragen werden.

In der DE 38 17 868 A1 ist ein Dichtring beschrieben, der zwischen zwei koaxial zueinander angeordnete Dichtflächen eingesetzt werden kann. Zur Ermöglichung eines Gleitens des Dichtringes ist es vorgesehen, ein Schmiermittel zu verwenden, das auf eine der Gleitflächen aufgetragen wird. Darüber hinaus wird ein inneres Gleiten beschrieben, das durch ein Zusammenwirken von zwei Dichtteilen ermöglicht wird. Das erste und das zweite Dichtteil sind relativ zueinander positionierbar angeordnet.

Ein weiterer Dichtring ist in der DE 29 00 437 A1 beschrieben. Auch dieser Dichtring ist für eine Anordnung zwischen zwei konzentrischen Dichtflächen vorgesehen. Der Dichtring weist zwei Dichtabschnitte auf, die jeweils mit einer Gleitoberfläche versehen sind. Die Dichtabschnitte berühren sich im Bereich ihrer Gleitoberflächen. Zur Verbesserung der Gleitwirkung kann ein Schmier- oder Gleitmittel verwendet werden. Das Gleitmittel wird auf die Gleitflächen aufgetragen.

In der DE 88 06 952 U1 wird eine Abdichtung für Betonfertigteile beschrieben. Die Dichtung kann mit Lippen versehen werden und ein auftragbares Gleitmittel vermindert Reibungskräfte bei einer Verarbeitung der Dichtung. Das Gleitmittel wird während der Verarbeitung über einen Gummischlauch zugeführt.

Diese bekannten Verfahren weisen jedoch Nachteile auf. Zum einen erfolgt die Dosierung des Gleitmittels oft ungenau. Insbesondere bei einer Durchführung der entsprechenden Tätigkeiten von Hilfspersonal ist damit zu rechnen, daß zu große Mengen des teuren Gleitmittels aufgetragen werden. Bei einer Imprägnierung der Dichtringe mit dem Gleitmittel vor ihrem Einbau entsteht das Problem, daß beispielsweise Verpackungsmaterial für die Dichtringe mit dem Gleitmittel benetzt wird und anschließend einer umweltgerechten Entsorgung zugeführt werden muß. Darüber hinaus bewirken einige Gleitmittel bei einer manuellen Montage als störend empfundene Fleckenbildungen.

Aufgabe der vorliegenden Erfindung ist es daher, einen Dichtring der einleitend genannten Art derart zu konstruieren, daß ausreichende Gleiteigenschaften gewährleistet werden und aus der Verwendung separater Gleitmittel resultierende Nachteile vermieden werden.

Diese Aufgabe wird erfindungsgemäß dadurch gelöst, daß dem Elastomer mindestens ein Gleitmittel beigemischt ist, das innerhalb der durch den Mischvorgang entstehenden Mischsubstanz positionsveränderlich angeordnet ist und mindestens während eines Teiles eines vorgegebenen Verwendungszeitraumes einen Gleitfilm ausbildend aus einer Oberfläche des aus der Mischsubstanz geferfigten Dichtrings austritt.

Durch diese Ausbildung des Dichtringes wird bereits durch dessen Produktion dafür gesorgt, daß die gewünschten Gleiteigenschaften bei späteren Verwendungen vorliegen. Es ist somit nicht erforderlich, erst unmittelbar vor bzw. während einer Verwendung diese Gleiteigenschaften zu erzeugen. Ungenauigkeiten bei der Dosierung des Gleitmittels entfallen somit.

Die Vorteile aus dieser Ausbildung des Dichtringes treten sowohl bei einer Montage des Dichtringes im Bereich der dabei vorgesehenen Sicke als auch bei der Herstellung der Steckmuffenverbindungen auf. Bei der Montage erfolgt eine erhebliche Erleichterung sowohl bei einer automatischen als auch bei einer manuellen Durchführung des Montagevorganges. Die Reibungskräfte zwischen dem Dichtring und dem Rohr werden erheblich herabgesetzt, so daß ein definiertes Gleiten des Ringes entlang des Rohres sowie eine definierte Überleitung in die Sicke gewährleistet ist. Dieses Verhalten kann auch bei schwierigen Geometrien des Ringes erzeugt werden.

Durch die Integration des Gleitmittels in das Elastomer werden sowohl Unterdosierungen, die zu einem ungenügenden Gleiten führen, als auch Überdosierungen, die zu Ansammlungen überschüssigen Gleitmittels führen, vermieden. Durch das Austreten des Gleitmittels aus der Oberfläche des Dichtringes wird gleichfalls ein aus der Verwendung bekannter Gleitmittel resultierender Effekt vermieden. Bei den bekannten Dichtringen tritt nach einer Versetzung mit dem Gleitmittel nach einer gewissen Zeit eine Reduzierung der Gleiteigenschaften durch ein Eindiffundieren des Gleitmittels in den Dichtring auf. Durch die Austrittseigenschaften des mit dem Elastomer vermischten Gleitmittels wird hingegen für einen deutlich längeren Zeitraum ein Gleitfilm im Bereich der Oberfläche des Dichtringes erzeugt.

Bei der Erzeugung der Steckmuffenverbindungen besteht ein zusätzlicher Vorteil neben der Reduzierung der Steckkräfte darin, daß Ablagerungen des Gleitmittels im Bereich von Außenflächen der Rohre bzw. der Fittinge und eine Verteilung des Gleitmittels in einer Umgebung der Steckmuffenverbindungen vermieden werden. Bei einer Verwendung von separat aufgetragenen Silikonölen ist es beispielsweise bekannt, daß im Bereich von Ablagerungsflächen nur ungenügende Hafteigenschaften für vorgesehene Anstriche vorliegen. Durch die Kombination des Gleitmittels mit dem Elastomer wird sichergestellt, daß das Gleitmittel definiert nur an der Oberfläche des Dichtringes auftritt und ein wesentlicher Abtrag des Gleitmittels vermieden wird. Aufgrund der exakten Dosierung des Gleitmittels erfolgt eine Materialeinsparung, die zur einer Kostenreduktion bei einer Verwendung der Dichtringe führt. Es werden darüber hinaus zusätzliche der Dichtringproduktion nachgeschaltete Arbeitsgänge eingespart, was zu einer Reduktion der anfallenden Lohn- sowie Investitionskosten führt.

Zur Verwendung einer unter Wärmeeinfluß vernetzbaren Mischsubstanz wird vorgeschlagen, daß das Elastomer als ein vulkanisierbares Elastomer ausgebildet ist.

Eine bei Temperaturabsenkung vernetzbare Mischsubstanz wird dadurch bereitgestellt, daß das Elastomer als ein thermoplastisches Elastomer ausgebildet ist.

Eine besonders zweckmäßige Realisierung des Gleitmittels erfolgt dadurch, daß das Gleitmittel als ein Amid einer ungesättigten organischen Fettsäure ausgebildet ist.

Zur Ermöglichung einer Verwendung im Bereich von trinkwasserführenden Leitungen wird vorgeschlagen, daß das Gleitmittel als ein Ölsäureamid ausgebildet ist.

Ein ausreichender Gleitfilm wird dadurch bereitgestellt, daß 100 Gewichtsanteilen des Elastomeres 1 bis 10 Gewichtsanteile Gleitmittel beigemischt werden.

Insbesondere wird ein guter Kompromiß zwischen einem ausreichenden Gleitverhalten und einem sparsamen Materialeinsatz dadurch realisiert, daß dem Elastomer 3 bis 7 Gewichtsanteile des Gleitmittels beigemischt werden.

Eine gleichmäßige und langandauernde Abgabe des Gleitmittels wird dadurch gewährleistet, daß das Gleitmittel im wesentlichen homogen im Elastomer verteilt ist.

Zur Bereitstellung von Dichtringen für standardisierte Anwendungen wird vorgeschlagen, daß die Mischsubstanz zu einem Dichtring für Rohre oder Fittinge mit genormten Sickengeometrien geformt ist.

Zusätzliche Anwendungsgebiete können dadurch abgedeckt werden, daß die Mischsubstanz zu einem Dichtring für spezielle Sickengeometrien gefertigt ist, bei denen die Sicke von miteinander kombinierbaren Elementen ausgebildet ist. Darüber hinaus ist es denkbar, daß die Mischsubstanz zu einem Dichtring für eine umformbare Sicke ausgebildet ist.

Zur Gewährleistung einer ausreichenden Dichtwirkung durch eine Geometrievorgabe wird vorgeschlagen, daß die Mischsubstanz zu einer Lippendichtung geformt ist.

Alternativ ist es aber auch denkbar, daß die Mischsubstanz zu einem Dichtring mit mindestens bereichsweise gerundeter Querschnittfläche geformt ist.

Die Vorteile bestimmter Geometrien lassen sich dadurch vereinigen, daß die Mischsubstanz zu einem Dichtring geformt ist, der sowohl mindestens eine Lippe als auch mindestens eine gerundete Querschnittfläche aufweist.

In der Zeichnung sind Ausführungsbeispiele der Erfindung schematisch dargestellt. Es zeigen:
- Fig. 1: einen Querschnitt durch einen Dichtring mit Spannring,
- Fig. 2: eine teilweise geschnittene Darstellung eines mit einem muffenförmigen Endstück versehenen Rohres, das eine Sicke aufweist, in die eine Lippendichtung eingesetzt ist,
- Fig. 3: eine Prinzipdarstellung eines Dichtringes mit gerundeter Querschnittsfläche, der in eine Sicke eingesetzt ist,
- Fig. 4: eine Prinzipdarstellung eines Lippendichtringes, der mit einem Spannring versehen ist und in eine Sicke eingesetzt ist,
- Fig. 5: einen Querschnitt durch eine Sicke mit einem weiteren Lippendichtring,
- Fig. 6: einen weiteren in eine Sicke eingesetzten Dichtring,
- Fig. 7: einen Querschnitt durch eine Sicke mit eingesetztem Dichtring sowie Spannring,
- Fig. 8: eine Prinzipdarstellung eines Blockschaltbildes zur Veranschaulichung einer Produktion der Dichtringe **und**
- Fig. 9: einen Querschnitt durch ein Rohrende, bei dem die Sicke zur Aufnahme des Dichtringes durch zwei miteinander kombinierbare Elemente ausgebildet ist, von denen jedes einen Teil der Sicke begrenzt.

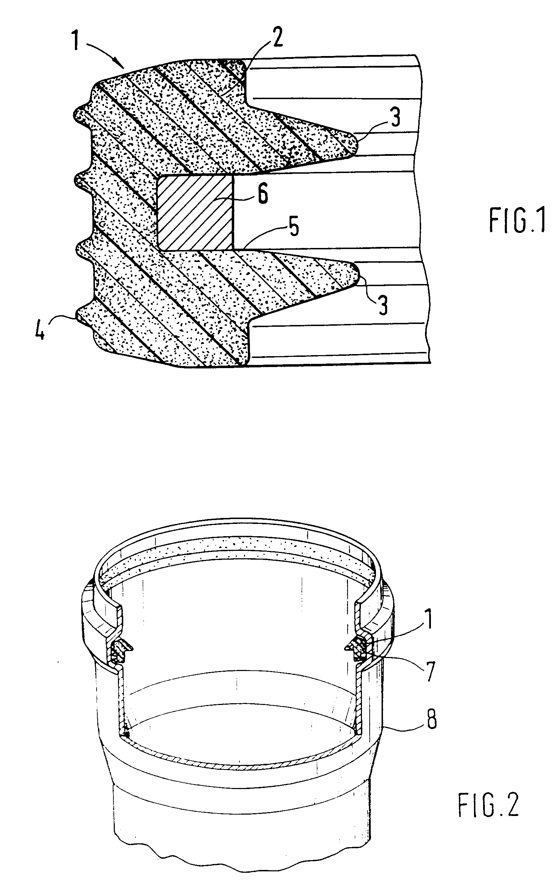

Ein Dichtring (1) zur Verwendung im Bereich von Steckmuffenverbindungen besteht aus einem oder mehreren Elastomeren, denen ein oder mehrere Gleitmittel beigemischt sind. Die aus dem Elastomer und dem Gleitmittel durch einen Mischvorgang entstehende Mischsubstanz (2) kann durch Preß-, Umform- oder Spritzgußverfahren zum Dichtring (1) geformt werden. Gemäß der Darstellung in Figur 1 kann der Dichtring (1) beispielsweise als ein Lippendichtring ausgebildet sein, der Lippen (3) sowie eine Umfangsprofilierung (4) aufweist. Darüber hinaus ist der Dichtring (1) mit einer Zentralnut (5) versehen, die einen Spannring (6) aufnimmt.

Bei der Ausführungsform gemäß Figur 2 ist der Dichtring (1) in eine Sicke (7) eines Rohres (8) eingesetzt. Das Rohr (8) kann beispielsweise als Kunststoff- oder Steinzeugrohr ausgebildet sein. Es ist aber ebenfalls möglich, Gußrohre oder Betonrohre mit entsprechenden Sicken (7) zu versehen. Statt einer Anordnung im Bereich des Rohres (8) kann die Sicke (7) auch im Bereich von Fittingen vorgesehen sein, die mit Rohrelementen zusammensteckbar sind. Die Rohre (8) können bei einer Vielzahl von Anwendungen eingesetzt werden. Beispielsweise sind Verwendungen als Frischwasserleitungssysteme, Kanalrohrleitungssysteme oder Hausabflußleitungssysteme realisierbar. Darüber hinaus kann durch die Rohre (8) auch ein Schutz von Elektroleitungen durchgeführt werden bzw. ein Kabelschutz für Leitungen im Kommunikationsbereich realisiert sein.

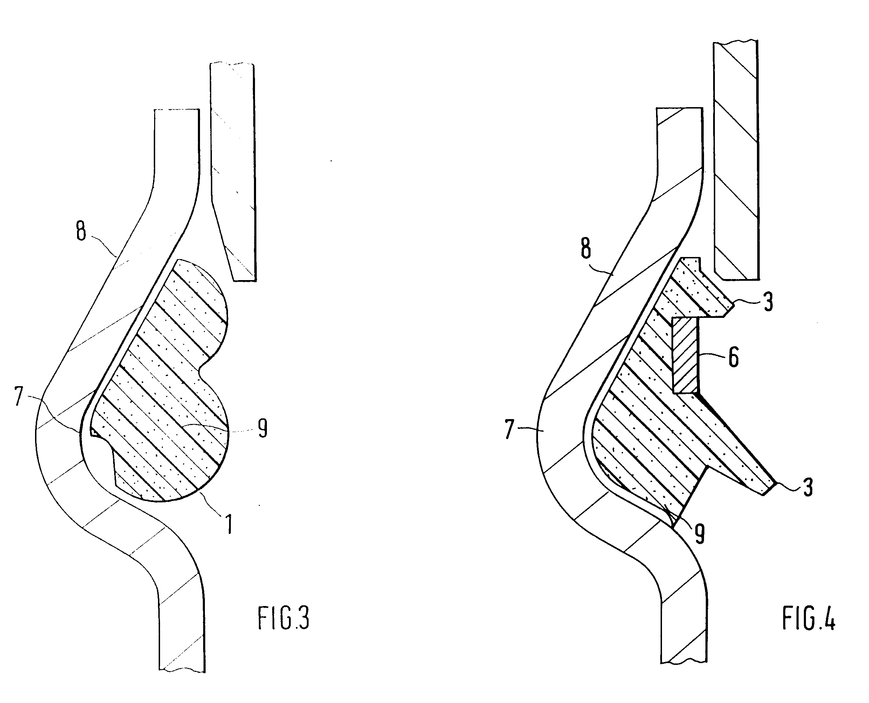

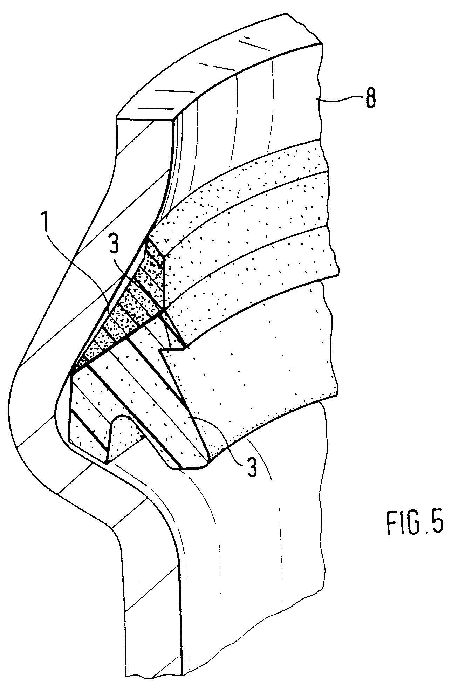

Alternativ zu einer Ausbildung des Dichtringes (1) mit Lippen (3) ist es gemäß der Darstellung in Fig. 3 auch denkbar, eine gerundete Querschnittfläche (9) bzw. Kombinationen von gerundeten Querschnittflächen (9) vorzusehen. Ein Spezialfall derartiger gerundeter Querschnittflächen (9) wird durch ein Rollring mit kreisförmiger Querschnittfläche realisiert. Ebenfalls ist es denkbar, gemäß der Darstellung in Figur 4 eine Kombination von gerundeten Querschnittflächen (9) und Lippen (3) zu realisieren. Auch bei derartigen Kombinationen kann ein Spannring (6) eingesetzt sein.

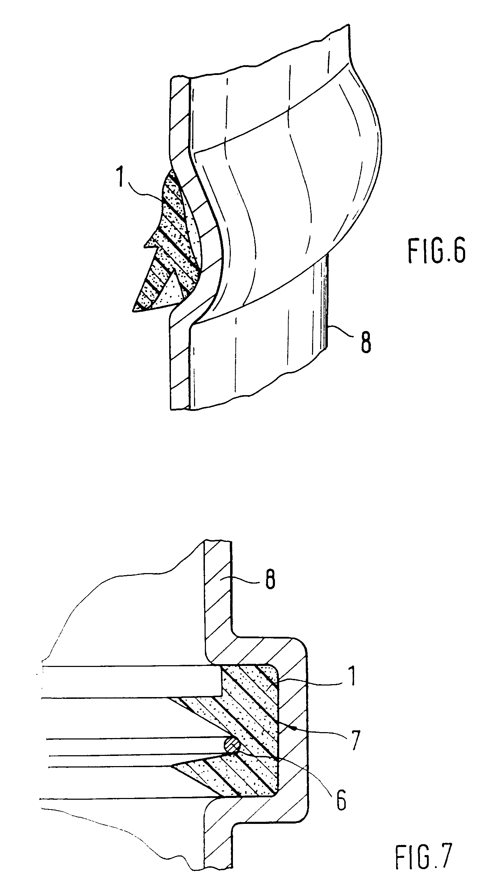

Alternativ zu einer Ausbildung des Dichtringes (1) aus einem einheitlichen Elastomer bzw. einer homogenen Mischung unterschiedlicher Elastomere ist es gemäß der Ausführungsform in Figur 5 auch denkbar, aneinandergrenzende Bereiche aus unterschiedlichen Elastomeren vorzusehen. Grundsätzlich ist es denkbar, in den jeweiligen Elastomerbereichen unterschiedliche Anteile des Gleitmittels vorzusehen bzw. unterschiedliche Substanzen als Gleitmittel zu verwenden. Durch eine entsprechende Materialkombination kann insbesondere gewährleistet werden, daß die Gleiteigenschaften innerhalb weiter Parameterbereiche realisiert werden und insbesondere ein großer Temperaturbereich abgedeckt ist. Grundsätzlich kann die Kombination des Elastomers und des Gleitmittels bei beliebigen Geometrien des Dichtringes (1) realisiert werden. Zur Veranschaulichung sind in Figuren 6 und 7 weitere alternative Ausführungsformen angegeben.

Sowohl die verwendeten Elastomere als auch die verwendeten Gleitmittel können sehr unterschiedliche chemische Eigenschaften aufweisen. Als Elastomere können beispielsweise zu Gummi vulkanisierte Elastomere oder thermoplastische Elastomere verwendet werden. Bei den vulkanisierbaren Elastomeren findet die vorgesehene Vernetzung durch eine Temperaturerhöhung sowie eine Druckerhöhung und bei den thermoplastischen Elastomeren durch eine Temperaturabsenkung nach einer Erhitzung zu einer Schmelze statt. Als vulkanisierte Elastomere können beispielsweise Elastomertypen der Sorten SBR, EPDM, IR, CR, NBR, HNBR, ACU, IIR oder NR bzw. entsprechende Verschnitte eingesetzt sein. Als Beispiel für ein thermoplastisches Elastomer sollen S-EB-S und PUR angeführt sein.

Als Gleitmittel können grundsätzlich alle Substanzen verwendet werden, die die geforderten Gleiteigenschaften aufweisen und zu einem Austritt aus dem Elastomer geeignet sind. Insbesondere haben sich hierbei Amide ungesättigter organischer Fettsäuren bewährt. Besonders vorteilhaft ist die Verwendung von Ölsäureanhydrid. Es ist aber auch möglich, beispielsweise Lauramide, Stearamide oder Eurecasäureamid zu verwenden.

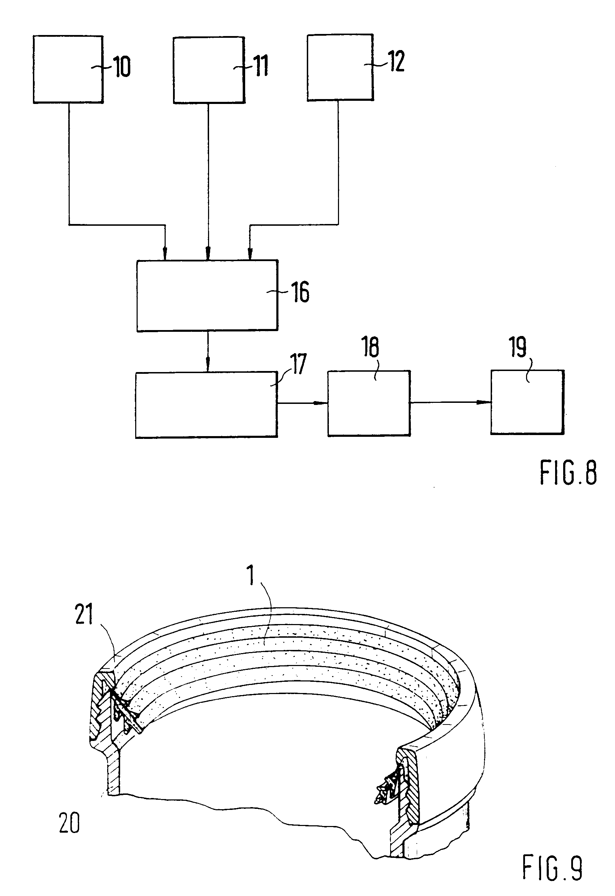

Zur Veranschaulichung des Produktionsvorganges sowie der Verwendung der Dichtringe (1) ist in Figur 8 ein Blockdiagramm angegeben. Aus einer Elastomerzuführung (10), einer Additivzuführung (11) sowie einer Gleitmittelzuführung (12) werden die jeweils vorgesehenen Substanzen einem Mischwerk (16) zugeleitet. Nach einer ausreichenden Temperierung und Vermischung der Substanzen wird die Mischsubstanz (2) einer Formstation (17) zugeführt, in der die Dichtringe (1) geformt werden. Die Zuführung erfolgt in einem abgekühlten Zustand in Form von Extruderfütterstreifen oder von Granulat. Die Dichtringe (1) werden dann im Bereich einer Montageeinrichtung (18) in die Sicken (7) eingesetzt und im Bereich einer Endverwendung (19) werden die Steckmuffenverbindungen realisiert.

Der Mischvorgang kann beispielsweise so durchgeführt werden, daß 100 Gewichtsanteilen des Elastomers (10) 1 bis 10 Gewichtsanteile Gleitmittel (12) zugesetzt werden. Insbesondere ist der Zusatz von 3 bis 7 Gewichtsanteilen an Gleitmittel (12) anzustreben.

Statt einer Verwendung der Dichtringe (1) im Bereich von starren Sicken (7) ist es ebenfalls denkbar, die Sicken (7) aus Teilelementen zu kombinieren. Gemäß Figur 9 ist die Sicke (7) von einem Rohrendstück (20) sowie einem Abschlußring (21) begrenzt. Der Dichtring (1) kann hier vor einem Aufschieben des Abschlußringes (21) auf das Rohrendstück (20) aufgesetzt werden und anschließend erfolgt eine Fixierung durch die Kombination des Rohrendstückes (20) und des Abschlußringes (21). Derartige Befestigungen werden auch als "Klick-Verbindungen" bezeichnet. Der Dichtring (1) wird hier durch einen Formschluß sehr dauerhaft in der Sicke (7) eingespannt.

Alternativ zu der bislang angegebenen separaten Fertigung der Dichtringe (1) und dem anschließenden Einsetzen in die Sicke (7) ist es ebenfalls realisierbar, die Mischsubstanz (2) unmittelbar in die Sicke (7) einzubringen und hier den gewünschten Dichtring (1) durch Formwerkzeuge auszubilden.

Bei einem Einsatz der Dichtringe in Kombination mit Kunststoffrohren können die Kunststoffrohre als genormte Kunststoffrohre mit genormten Sickengeometrien ausgebildet sein und beispielsweise aus PP, PVC, PE oder ABS bestehen.

Alternativ zu einer Formung des Dichtringes (1) in einem Fertigschnitt ist es auch möglich, zunächst ein lineares Dichtungsprofil zu extrudieren und dieses anschließend durch einen Klebe- oder nachträglichen Vernetzungsvorgang zu einem Dichtring (1) zu fertigen. Jeweils benötigte Längen werden dabei aus dem Dichtungsstrang herausgetrennt.

## Patentansprüche

1. Dichtring für Steckmuffenverbindungen im Bereich von rohrförmigen Körpern, der aus mindestens einem Elastomer ausgebildet ist, dadurch gekennzeichnet, daß dem Elastomer mindestens ein Gleitmittel beigemischt ist, das innerhalb der durch den Mischvorgang entstehenden Mischsubstanz (2) positionsveränderlich angeordnet ist und mindestens während eines Teiles eines vorgesehen Verwendungszeitraumes einen Gleitfilm ausbildend aus einer Oberfläche des aus der Mischsubstanz (2) gefertigten Dichtringes (1) austritt.

2. Dichtring nach Anspruch 1, dadurch gekennzeichnet, daß das Elastomer als ein vulkanisierbares Elastomer ausgebildet ist.

3. Dichtring nach Anspruch 1, dadurch gekennzeichnet, daß das Elastomer als ein thermoplastisches Elastomer ausgebildet ist.

4. Dichtring nach einem der Ansprüche 1 bis 3, dadurch gekennzeichnet, daß das Gleitmittel als ein Amid einer ungesättigten organischen Fettsäure ausgebildet ist.

5. Dichtring nach einem der Ansprüche 1 bis 4, dadurch gekennzeichnet, daß das Gleitmittel als ein Ölsäureamid ausgebildet ist.

6. Dichtring nach einem der Ansprüche 1 bis 5, dadurch gekennzeichnet, daß 100 Gewichtsanteilen des Elastomeres 1 bis 10 Gewichtsanteile Gleitmittel beigemischt werden.

7. Dichtring nach Anspruch 6, dadurch gekennzeichnet, daß dem Elastomer 3 bis 7 Gewichtsanteile des Gleitmittels beigemischt werden.

8. Dichtring nach einem der Ansprüche 1 bis 7, dadurch gekennzeichnet, daß das Gleitmittel im wesentlichen homogen im Elastomer verteilt ist.

9. Dichtring nach einem der Ansprüche 1 bis 8, dadurch gekennzeichnet, daß der Dichtring (1) für Rohre oder Fittinge mit genormten Sickengeometrien geformt ist.

10. Dichtring nach einem der Ansprüche 1 bis 9, dadurch gekennzeichnet, daß der Dichtring (1) für spezielle Sickengeometrien gefertigt ist, bei denen die Sicke (7) von miteinander kombinierbaren Elementen ausgebildet ist.

11. Dichtring nach einem der Ansprüche 1 bis 8, dadurch gekennzeichnet, daß der Dichtring (1) für eine umformbare Sicke ausgebildet ist.

12. Dichtring nach einem der Ansprüche 1 bis 11, dadurch gekennzeichnet, daß der Dichtring (1) zu einer Lippendichtung geformt ist.

13. Dichtring nach einem der Ansprüche 1 bis 12, dadurch gekennzeichnet, daß der Dichtring (1) eine mindestens bereichsweise gerundete Querschnittfläche (9) aufweist.

14. Dichtring nach einem der Ansprüche 1 bis 10, dadurch gekennzeichnet, daß der Dichtring (1) sowohl mindestens eine Lippe (3) als auch mindestens eine gerundete Querschnittfläche (9) aufweist.

## Claims

1. Sealing ring for spigot-and-socket connections in the region of tubular bodies, which is formed from at least one elastomer, characterized in that admixed to the elastomer is at least one lubricating agent, which is disposed variably with regard to its position within the mixed substance (2) produced by the mixing process and at least during some of an intended period of use exudes from a surface of the sealing ring (1) produced from the mixed substance (2) so as to form a sliding film.

2. Sealing ring according to claim 1, characterized in that the elastomer is a curable elastomer.

3. Sealing ring according to claim 1, characterized in that the elastomer is a thermoplastic elastomer.

4. Sealing ring according to one of claims 1 to 3, characterized in that the lubricating agent is an amide of an unsaturated, organic fatty acid.

5. Sealing ring according to one of claims 1 to 4, characterized in that the lubricating agent is an oleic acid amide.

6. Sealing ring according to one of claims 1 to 5, characterized in that 1 to 10% by weight of lubricating agent is admixed to 100% by weight of the elastomer.

7. Sealing ring according to claim 6, characterized in that 3 to 7% by weight of the lubricating agent is admixed to the elastomer.

8. Sealing ring according to one of claims 1 to 7, characterized in that the lubricating agent is distributed substantially homogeneously in the elastomer.

9. Sealing ring according to one of claims 1 to 8, characterized in that the sealing ring (1) is shaped for pipes or fittings having standard corrugation geometries.

10. Sealing ring according to one of claims 1 to 9, characterized in that the sealing ring (1) is manufactured for special corrugation geometries, in which the corrugation (7) is formed by elements which may be combined with one another.

11. Sealing ring according to one of claims 1 to 8, characterized in that the sealing ring (1) is designed for a deformable corrugation.

12. Sealing ring according to one of claims 1 to 11, characterized in that the sealing ring (1) is shaped to form a lip seal.

13. Sealing ring according to one of claims 1 to 12, characterized in that the sealing ring (1) has an, at least in sections, rounded cross-sectional area (9).

14. Sealing ring according to one of claims 1 to 10, characterized in that the sealing ring (1) has both at least one lip (3) and at least one rounded cross-sectional area (9).

## Revendications

1. Bague d'étanchéité pour dispositifs de connexion à manchon à emboîtement dans la zone d'éléments tubulaires qui est formée d'au moins un élastomère, caractérisée en ce qu'à l'élastomère, il a été ajouté en mélange au moins un agent lubrifiant qui a été prévu de façon à pouvoir changer de position à l'intérieur de la substance de mélange (2) produite par l'opération de mélange et qui, au moins au cours d'une partie d'un laps de temps d'utilisation prévu, sort en formant une pellicule lubrifiante d'une surface de la bague d'étanchéité (1) fabriquée à partir de la substance de mélange (2).

2. Bague d'étanchéité suivant la revendication 1, caractérisé en ce que l'élastomère a été prévu sous la forme d'un élastomère pouvant se vulcaniser.

3. Bague d'étanchéité suivant la revendication 1, caractérisée en ce que l'élastomère a été prévu sous la forme d'un élastomère thermoplastique.

4. Bague d'étanchéité suivant l'une quelconque des revendications 1 à 3, caractérisée en ce que l'agent lubrifiant a été prévu sous la forme d'un amide d'un acide gras organique insaturé.

5. Bague d'étanchéité suivant l'une quelconque des revendications 1 à 4, caractérisée en ce que l'agent lubrifiant a été prévu sous la forme d'un amide d'acide oléique .

6. Bague d'étanchéité suivant l'une quelconque des revendications 1 à 5, caractérisé en ce qu'à 100 parties en poids de l'élastomère il est ajouté en mélange 1 à 10 parties en poids d'agent lubrifiant.

7. Bague d'étanchéité suivant la revendication 6, caractérisée en ce qu'à l'élastomère, il est ajouté en mélange 3 à 7 parties en poids de l'agent lubrifiant.

8. Bague d'étanchéité suivant l'une quelconque des revendications 1 à 7, caractérisée en ce que l'agent lubrifiant a été réparti de façon sensiblement homogène dans l'élastomère.

9. Bague d'étanchéité suivant l'une quelconque des revendications 1 à 8, caractérisée en ce que la bague d'étanchéité (1) a été formée pour des tubes ou des tuyaux ou pour des raccords de tuyauteries présentant des géométries de gorges normalisées.

10. Bague d'étanchéité suivant l'une quelconque des revendications 1 à 9, caractérisée en ce que la bague d'étanchéité (1) a été fabriquée pour des géométries de gorges spéciales dans le cas desquelles la gorge (7) a été formée par des éléments pouvant être combinés l'un avec l'autre.

11. Bague d'étanchéité suivant l'une quelconque des revendications 1 à 8, caractérisée en ce que la bague d'étanchéité (1) a été formée pour une gorge dont la forme peut se modifier.

12. Bague d'étanchéité suivant l'une quelconque des revendications 1 à 11, caractérisée en ce que la bague d'étanchéité (1) a été formée pour donner un joint d'étanchéité à lèvres.

13. Bague d'étanchéité suivant l'une quelconque des revendications 1 à 12, caractérisée en ce que la bague d'étanchéité (1) présente une face de section transversale (9) arrondie au moins par endroits.

14. Bague d'étanchéité suivant l'une quelconque des revendications 1 à 10, caractérisée en ce que la bague d'étanchéité (1) présente tant au moins une lèvre (3) qu'au moins une face de section transversale arrondie (9).
